Europäisches Patentamt

European Patent Office

Office européen des brevets

(19)

(11) Numéro de publication: **0 021 993**

**B1**

(12) **FASCICULE DE BREVET EUROPEEN**

(45) Date de publication du fascicule du brevet: **19.09.84**

(51) Int. Cl.³: **G 02 B 5/14**

(21) Numéro de dépôt: **80400897.7**

(22) Date de dépôt: **18.06.80**

(54) **Lentille de Fresnel intégrée.**

(30) Priorité: **22.06.79 FR 7916081**

(43) Date de publication de la demande:
**07.01.81 Bulletin 81/01**

(45) Mention de la délivrance du brevet:
**19.09.84 Bulletin 84/38**

(84) Etats contractants désignés:
**DE GB IT NL**

(56) Documents cités:
**FR-A-2 143 044**

**APPLIED PHYSICS LETTERS, vol. 33, no. 6, 15
septembre 1978, New York US P.R. ASHLEY et
al.: "Fresnel lens in a thin-film waveguide"
pages 490-492
D. MARCUSE: "Integrated Optics" IEEE, 1973
New York US R. SHUBERT et J.H. HARRIS:
"Optical Guided-Wave Focusing and
Diffraction", pages 33-40
Journal Optical Society of America, vol. 61, No.
2, p. 154-161**

(73) Titulaire: **COMMISSARIAT A L'ENERGIE
ATOMIQUE Etablissement de Caractère
Scientifique Technique et Industriel
B.P. 510
F-75752 Paris Cedex 15 (FR)**

(72) Inventeur: **Mottier, Patrick
18, rue Mozart
F-38000 Grenoble (FR)**
Inventeur: **Valette, Serge
24, rue Turenne
F-38000 Grenoble (FR)**

(74) Mandataire: **Mongrédien, André et al
c/o BREVATOME 25, rue de Ponthieu
F-75008 Paris (FR)**

Courier Press, Leamington Spa, England.

## Description

La présente invention se rapporte à une lentille du types de Fresnel, destinée à fonctionner dans des structures optiques intégrées.

Les techniques de transmission de l'information à distance utilisent depuis quelques années la transmission par ondes lumineuses à partir de guides de lumière qui sont constitués le plus souvent de fibres optiques ultrafines ou de guides d'ondes optiques comportant un empilement en sandwichs de couches alternées de matériaux transparents, généralement d'ailleurs semi-conducteurs. Le guide d'ondes transparent le plus simple est ainsi un sandwich constitué d'un matériau de haut indice de réfraction inséré entre deux matériau de haut indice de réfraction inséré entre deux matériaux d'indices plus faibles. Dans un tel guide d'ondes, un rayon lumineux se propage selon un trajet en zigzag dans la couche médiane en subissant des réflexions totales alternativement sur l'une puis sur l'autre des interfaces. La possibilité de réaliser aujourd'hui des sources lumineuses sous forme de laser à diode semi-conductrice ainsi que d'obtenir la modulation du faisceau lumineux transporté par modification de l'indice de réfraction d'une couche semi-conductrice à l'aide de champs électriques externes appliqués, permet la réalisation d'un circuit complet d'émission, transmission et décodage d'une information sous forme lumineuse par les techniques bien connues de réalisation de semi-conducteurs du type intégré. C'est la raison pour laquelle cette nouvelle optique de transmission de l'information à distance est appelée couramment "optique intégrée".

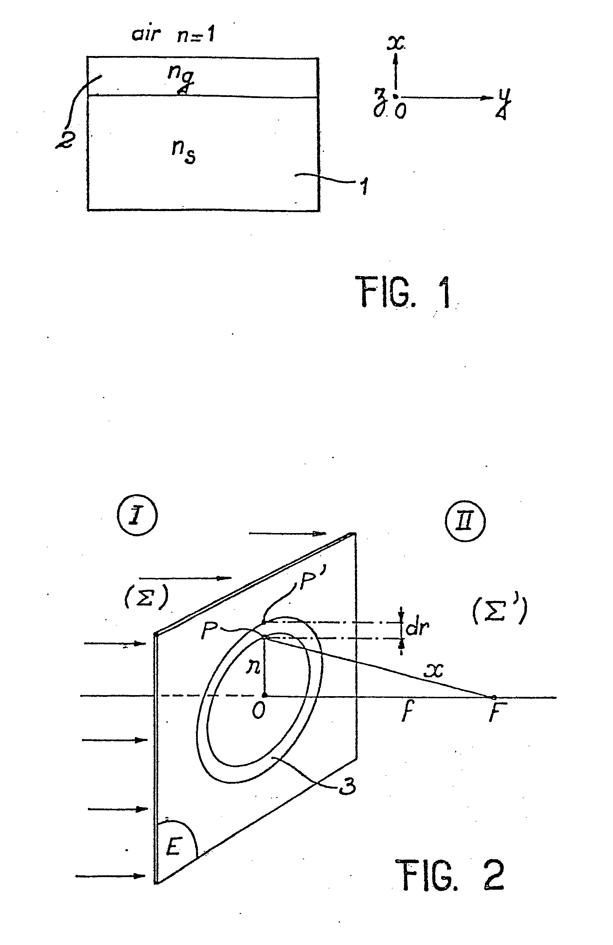

Une structure guide d'ondes connue, et de la conception la plus simple possible, est représentée sur la figure 1. Elle est constituée d'un substrat 1 d'indice $n_s$ recouvert d'une couche guidante 2 d'indice $n_g$. L'air environnant d'indice n=1 joue le rôle du deuxième substrat. Dans un tel guide d'ondes, la propagation étant supposée se faire selon l'axe Oz perpendiculaire à la figure, la résolution des équations de Maxwell montre qu'il existe deux modes de propagation possibles, correspondant chacun à une polarisation particulière de la lumière: dans le mode dit transverse électrique (TE), le champ électrique $\vec{E}$ est parallèle à la direction Oy; dans le mode dit transverse magnétique (TM) c'est le champ magnétique $\vec{H}$ qui est parallèle à la direction Oy. Chacun des modes précédents est caractérisé par son indice effectif de propagation $n_{eff}$, relié à la vitesse v de propagation de l'onde lumineuse par la formule:

$$v = \frac{c}{n_{eff}}$$

formule dans laquelle c est la vitesse de la lumière dans le vide. La valeur de $n_{eff}$ dépend alle-même de la valeur des différents indices des couches du système constituant le guide d'ondes, ainsi que de leurs épaisseurs relatives. Il en résulte qu'en optique intégrée la vitesse d'une onde lumineuse peut être modifiée soit par des variations de l'indice optique, soit par des variations d'épaisseur des différentes couches en présence. Cette remarque est fondamentale et sera utilisée, comme on le verra plus loin, dans le cadre de la présente invention.

Enfin, il est utile de rappeler que l'onde lumineuse se propageant dans un guide optique est parfois évanescente au moins dans les deux milieux extrêmes, c'est-à-dire dans les substrats. Ceci signifie qu'elle n'est pas totalement contenue à l'intérieur de la couche guidante, mais pénètre, de façon inhomogène, sur une très faible épaisseur des couches immédiatement voisines. Dans le cas particulier de guide d'ondes de la figure 1, la condition nécessaire et suffisante pour obtenir la présence d'une onde évanescente dans les mileux extrêmes que constituent le substrat 1 et l'air environnant, réside dans la relation suivante entre les différents indices des couches constituantes et l'indice effectif:

$$1 < n_s < n_{eff} < n_g.$$

Par transposition des phénomènes connus en optique classiques, on a cherché à réaliser sous forme de composants intégrés des structures équivalentes aux structures anciennes pour assurer la propagation correcte de la lumière dans un espace qui ne comporte plus que deux dimensions au lieu des trois dimensions habituelles de l'optique classique. Pour transformer notamment une onde lumineuse plane en onde sphérique, c'est-à-dire faire converger un faisceau de lumière parallèle en un point appelé foyer, on utilise couramment en optique classique des systèmes de lentilles qui présentent plus ou moins de défauts optiques, connus sous le nom d'aberrations, et qui ont pour conséquence une imperfection de la qualité de concentration de la lumière au foyer. Pour pallier cette difficulté, le physicien Fresnel avait mis au point en optique classique des lentilles qui portent son nom et qui permettent, en corrigeant les aberrations dues aux bords trop convergents des lentilles, d'obtenir une concentration quasi parfaite de la lumière en leur foyer.

Nous commencerons d'abord, en nous référant à la figure 2, par rappeler le principe connu de fonctionnement d'une lentille de Fresnel en optique classique. Considérons sur la figure 2 une onde lumineuse plane (Σ), parvenant, dans la zone I située sur la partie gauche de la figure, sur un plan d'ondes diffractant E. D'après le principe de Fresnel-Huyghens, on peut considérer chacun des points de l'écran E comme une source lumineuse dont les vibrations sont de la forme:

$$A \cos 2\pi \frac{t}{T}$$

si l'on considère que tous les points de l'écran E sont en phase et si l'on prend cet écran comme origine des phases.

Soit une bande circulaire diffractante mince telle que celle référencée 3 sur la figure 2, et comprise entre les deux circonférences passant par les points P et P', distants de r de l'axe O et de dr l'un de l'autre, on peut écrire que la vibration diffractée en un point F de l'axe du système par la bande circulaire 3 de largeur dr est, à un coefficient près, de la forme:

$$A' \, dr \cos 2\pi(\frac{t}{T} - \frac{x}{\lambda})$$

formule dans laquelle T est la periode de la vibration lumineuse, $\lambda$ sa longueur d'onde, t le temps et x la distance du point P au point F. Dans ces conditions, pour obtenir l'expression exacte de la vibration totale diffractée par l'écran E au point F, il conviendrait de faire l'intégrale de l'expression précédente de O à r, en tenant compte bien sûr du fait que:

$$x = \sqrt{r^2 + f^2}$$

De façon pratique, Fresnel a imaginé une méthode plus simple pour le calcul de cette intégrale, qui consiste à décomposer le surface de l'écran E située autour du point O en un certain nombre de bandes annulaires élémentaires de centre O telles que, lorsque l'on passe de la bande d'ordre m de rayon $r_m$ à la bande d'ordre m+1 de rayon $r_{m+1}$, la distance au point F augmente progressivement d'une demi-longueur d'onde, c'est-à-dire de $\lambda/2$. On peut alors écrire les égalités suivantes:

$$x_m = f + m\frac{\lambda}{2} \text{ (m nombre entier),}$$

et

$$x_m^2 = r_m^2 + f^2,$$

formules dans lesquelles $x_m$ est la distance entre le point $P_m$ distant de $r_m$ du point O et le point F, et $\lambda$ la longueur d'onde lumineuse utilisée. Du rapprochement des deux équations précédentes, on peut écrire en remplaçant dans la seconde $x_m^2$ par sa valeur tirée de la première:

$$f^2 + mf\lambda + m^2\frac{\lambda^2}{4} = r_m^2 + f^2$$

Si l'on néglige le terme en

$$\frac{\lambda^2}{4}$$

ce qui est en pratique justifié car la longueur d'onde $\lambda$ est toujours très inférieure à f, on obtient alors $r_m = \sqrt{mf\lambda}$.

Autrement dit, pour que la condition imposée au départ sur les variations de parcours des différentes vibrations diffractées en F par chacune des bandes annulaires successives soit respectée, les bandes doivent avoir des rayons $r_m$ qui croissent comme la racine carrée des entiers successifs.

Or, par définition même, on a choisi les différentes bandes circulaires de raoyns $r_m$ de façon telle qu'en passant de l'une à l'autre, la vibration diffractée en F par une zone soit déphasée de $\pi$ par rapport à la précédente, puisque son parcours diffère d'une demi-longueur d'onde. Il en résulte par conséquent que toutes les bandes annulaires de rang pair (m=0, 2, 4, 6,...) diffractent en F des composantes de vibrations en phase entre elles, que toutes les bandes de rang impair (m=1, 3, 5,...) diffractent en F des composantes de vibrations en phase entre alles, les deux familles de composantes de vibration étant déphasées de $\pi$ l'une par rapport à l'autre.

Dans ces conditions, si l'on veut que le système soit réellement une lentille faisant converger rigoureusement les rayons parallèles de l'onde ($\Sigma$) de la zone I en phase au point F de la zone II suivant l'onde sphérique ($\Sigma'$), deux solutions sont possibles:

— la première consiste à introduire un déphasage complémentaire de $\pi$ à toutes les composantes de vibration des bandes circulaires de rang pair ou de rang impair et on obtient alors une lentille de Fresnel dite à déphasage;
— la seconde consiste à absorber l'énergie lumineuse d'une bande sur deux, en ne laissant subsister que les bandes paires ou impaires qui, comme on vient de le voir, sont toutes en phase. On obtient alors une lentille de Fresnel dite à absorption, qui a pour inconvénient que l'amplitude de la lumière au point F est divisée par 2 et, par suite, son intensité par 4.

Pour réaliser une lentille de Fresnel en optique intégrée, on peut transposer les enseignements précédents de l'optique classique au cas où la lumière se propage dans un milieu à deux dimensions. L'expérience montre que l'approximation qui résulte du fait que l'on néglige l'existence d'une propagation selon les modes guidés est acceptable.

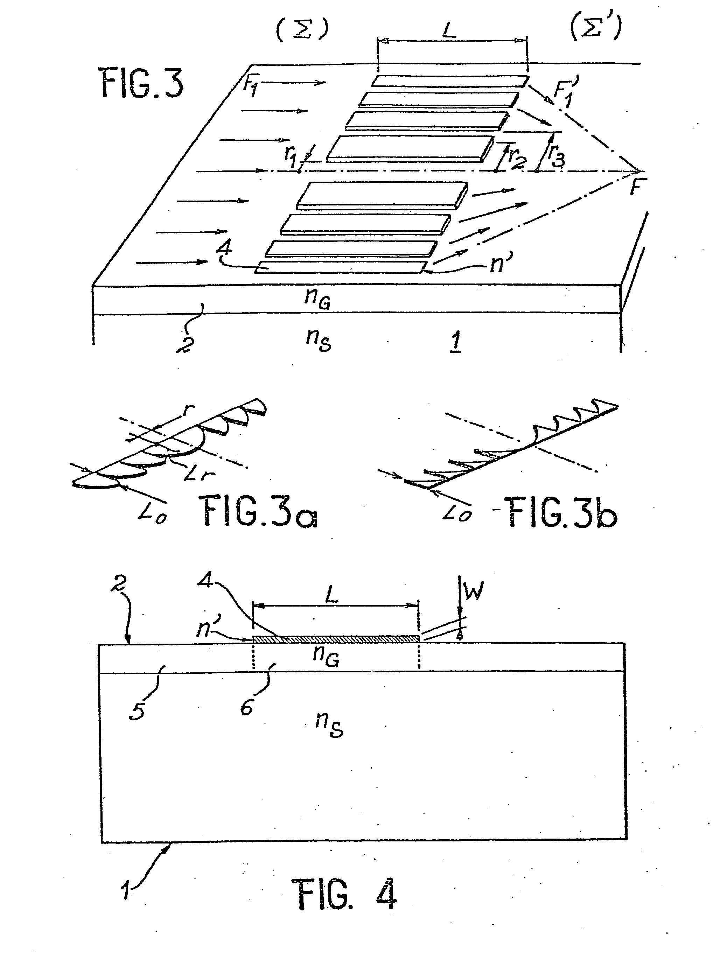

Les figures 3, en perspective cavalière, et 4, coupe de la figure 3 selon l'une des surcouches de celle-ci, permettent de comprendre la composition d'une telle lentille de Fresnel intégrée.

On retrouve dans cette lentille les couches 1 et 2 du guide d'ondes de la figure 1, et l'on a figuré par des flèches $F_1$ les trajets lumineux de l'onde plane ($\Sigma$) parvenant sur la lentille, qu'il s'agit de transformer en une onde ($\Sigma'$) circulaire

dont les rayons $F'_1$ convergent vers un point de l'axe F constituant le foyer de la lentille. Par assimilation avec les lentilles de Fresnel classiques, une lentille de Fresnel en optique intégrée se compose d'un certain nombre de zones linéaires parallèles à l'axe et situées à des distances $r_m$ de l'axe telles que:

$$r_m = \sqrt{m\lambda_f}, \text{ et } \lambda = \frac{\lambda_o}{n_{eff}}$$

formule dans laquelle $\lambda_o$ est la longueur d'onde dans le vide de la radiation lumineuse utilisée. Ces différentes zones linéaires assurent, soit un déphasage convenable d'une moitié de la lumière incidente, soit une absorption totale d'une moitié des rayons lumineux de façon à ne laisser passer en direction du foyer F que des vibrations en phase produisant des interférences constructives en ce point. De façon pratique, les différentes zones precédentes sont réalisées par des surcouches 4 constituées de plaquettes plates de longueur L, d'épaisseur W et d'indice n' comme on le voit sur les figures 3 et 4.

Si en effet, à la structure initiale de la figure 1, on superpose sur une longueur L une couche d'indica n' et d'épaisseur W comme indiqué sur la figure 4, on change la valeur de l'indice effectif pour la propagation d'une onde suivant le mode guidé TE, indice qui de $n_{eff}$ dans la zone 5 devient $n'_{eff}$ dans la zone 6. Une onde guidée qui se propage selon le mode TE sur la longueur L dans cette nouvelle structure acquiert par conséquent, par rapport à la phase qu'elle avait dans la structure initiale un déphasage

$$\Delta\phi = \frac{2\pi\,\Delta n L}{\lambda_o}$$

formule dans laquelle $\Delta n = n'_{eff} - n_{eff}$. On conçoit par conséquent la possibilité, à l'aide de surcouches de cette nature, de modifier localement le déphasage d'une onde guidée par changement de la structure guidante multicouches et d'obtenir ainsi une lentille de Fresnel du type à déphasage.

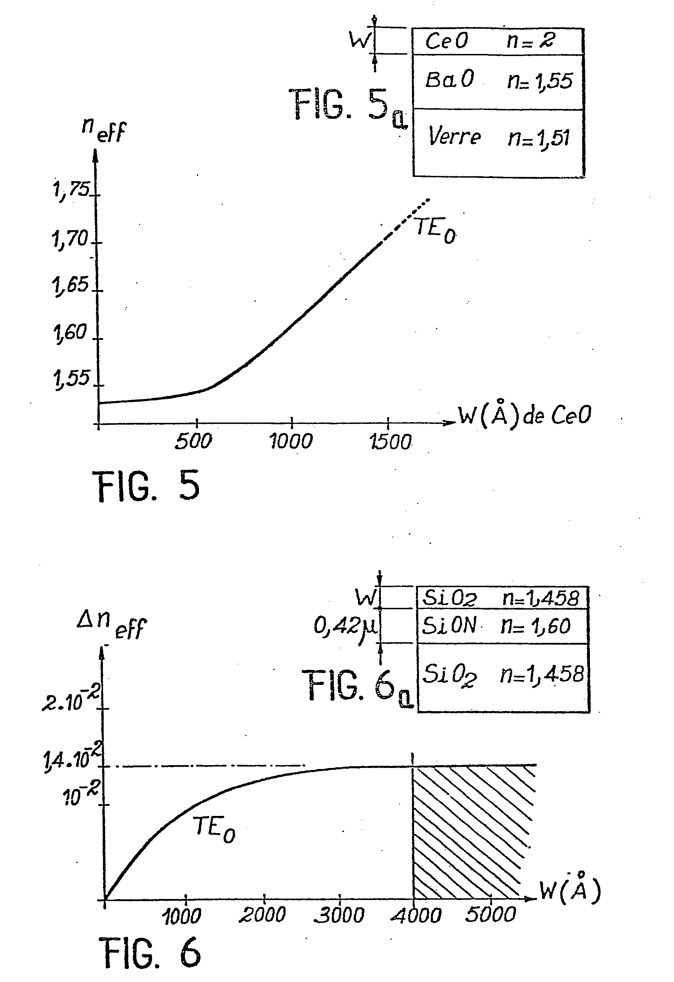

De telles lentilles de Fresnel à déphasage en structure optique intégrée ont d'ailleurs déjà été proposées comme en témoigne par exemple l'article "Fresnel lens in a thin-film waveguide" paru dans Applied Physical Letters 33(6), le 15.9.1978. Dans cet article, on décrit une lentille de Fresnel à déphasage optique obtenu à l'aide d'un certain nombre de surcouches en forme de plaquettes plates selon une structure comparable à celle qui est représentée sur les figures 3 et 4 précedentes. De façon plus précise, et comme représenté sur la figure 5a, le substrat est un verre d'indice $n_1 = 1,51$, la couche de guidage est une couche d'oxyde de baryum BaO d'indice $n_2 = 1,55$ et les plaquettes constituant les différentes surcouches sont constituées d'oxyde de cérium CeO d'indice $n_3 = 2,0$. Dans cette réalisation, on constitue donc les surcouches à l'aide d'un matériau dont l'indice de réfraction est supérieur à celui du guide d'ondes. Ceci présente de nombreux inconvénients que l'on peut résumer ainsi:

a) l'onde lumineuse, homogène dans le guide d'onde en BaO est également homogène dans la surcouche de CeO d'indice supérieur. L'indice effectif du mode guidé augmente dans ce cas continûment avec l'épaisseur W de la surcouche de CeO, ce qui nécessite un excellent contrôle de cette épaisseur W.

b) les différences d'indices introduites par une couche d'indice supérieur au guide sont, d'autre part, très importantes. Pour introduire un déphasage de $\pi$, la longueur L des motifs gravés doit être très courte, ce que conduit à une précision faible sur le déphasage introduit

$$\left(\Delta\phi = \pi\frac{\Delta L}{L}\right)$$

puisque $\Delta L$ est pratiquement constant et imposé par la technologie.

A titre d'exemple, on a tracé sur la figure 5 les courbes de variations de $n_{eff}$ pour le mode TE en fonction de l'épaisseur W de la surcouche de CeO dans l'exemple décrit. Dans la zone de travail choisie (W~1000 Å) la pente $\Delta n_{eff}/dW$ est d'environ $2.10^{-4}$ par Å (il faut noter que des couches inférieures à 500 Å sont délicates à réaliser de façon homogène). Ceci, avec une longueur de zone L de 500 $\mu$m, correspond à une variation de déphasage $\Delta\phi$ de 0,033 $\pi$ par Å. Cela signifie que le contrôle de l'épaisseur W doit être fait à mieux que 10 Å, ce qui est très difficile voir quasi impossible à réaliser pour des fabrications de série.

Par ailleurs, on n'a jamais, à la connaissance de la demanderesse, réalisé à ce jour de lentilles de Fresnel en optique intégrée du type à absorption.

La présente invention a précisément pour objet une lentille de Fresnel pour optique intégrée qui tout en étant d'une réalisation aussi simple que celles de l'art antérieur précédemment décrites, permet d'éviter les difficultés inhérent à la définition précise des longueurs et des épaisseurs des différentes surcouches utilisées sur le guide d'ondes. Elle est réalisable aussi bien sous forme de lentille à déphasage que de lentille à absorption.

En effet, si une surcouche de matériau absorbant est déposée au-dessus de la structure initiale, les ondes guidées se propageant selon les modes propres de cette nouvelle structure subissent un coefficient d'absorption $\alpha'$ plus grand que le coefficient $\alpha$ de la structure initiale. Si le matériau absorbant á été déposé sous forme d'une surcouche de longueur L, l'onde se propageant dans la structure ainsi modifiée, verra son intensité affaiblie d'un facteur $e^{-(\alpha'-\alpha)L}$ par rapport à une onde se propageant dans la structure initiale. En pratique, il y a intérêt à disposer des surcouches conduisant à de grandes valeurs de la différence $(\alpha'-\alpha)$ de façon à obtenir, même pour des valeurs faibles de L, une absorption locale de lumière importante.

Les explications précédentes permettent de comprendre que l'optique intégrée autorise, par modification du système de guide d'ondes multicouches à l'aide de surcouches localisées, d'obtenir l'un des deux effets souhaités (déphasage ou absorption) sur les zones paires ou impaires de la lumière incidente pour réaliser une lentille de Fresnel sous forme intégrée.

La lentille de Fresnel à déphasage, objet de l'invention du genre de celles qui comportent, ordonnancées de façon symétrique de part et d'autre de l'axe optique de la lentille, un nombre p de bandes de Fresnel à la surface d'un guide d'ondes propageant une onde selon un mode de propagation déterminé, la bande d'ordre m en partant de l'axe étant de largeur

$$l_m = \sqrt{(m+1)\lambda f} - \sqrt{m\lambda f}$$

et à la distance de l'axe $r_m = \sqrt{m\lambda f}$, formules dans lesquelles f est la distance focale de la lentille, m est une paramètre prenant successivement les différentes valeurs de la suite naturelle des nombres entiers de 1 à p et $\lambda$ la longueur d'onde utilisée, et des surcouches déposées sur les bandes de Fresnel d'ordre m pair (ou impair) en vue d'assurer un déphasage de $\pi$ de la vibration lumineuse dans les parties du guide d'ondes correspondant auxdites surcouches, se caractérise en ce que l'indice réel de réfraction du matériau des surcouches est choisi inférieur à l'indice effectif pour le mode guidé dans le guide d'ondes et en ce que l'épaisseur W des surcouches dans le sens perpendiculaire à la propagation de la lumière est choisie supérieure à la valeur pour laquelle la variation de l'indice effectif de la partie du guide d'ondes sous-jacente se sature, ledit déphasage de $\pi$ de la vibration lumineuse au niveau des surcouches résultant uniquement du choix de la longueur L de chacune desdites surcouches dans le sens de la propagation de la lumière.

La présente invention a également pour objet un lentille de Fresnel à absorption; pour optique intégrée, du genre de celles qui comportent, ordonnancées de façon symétrique de part et d'autre de l'axe optique de la lentille, un nombre p de bandes de Fresnel à la surface d'un guide d'ondes propageant une onde selon un mode de propagation déterminé, la bande d'ordre m en partant de l'axe étant de largeur

$$1_m = \sqrt{(m+1)\lambda f} - \sqrt{m\lambda f}$$

et à la distance de l'axe $r_m = \sqrt{m\lambda f}$, formules dans lesquelles f est la distance focale de la lentille, m est un paramère prenant successivement les différentes valeurs de la suite naturelle des nombres entiers de 1 à p et $\lambda$ la longueur d'onde utilisée et des surcouches déposées sur les bandes de Fresnel d'ordre m pair (ou impair) en vue d'assurer une absorption substantielle de la lumière dans les parties du guide d'ondes correspondant auxdites surcouches, qui se caractérise en ce que ladite absorption substantielle de la lumière dans les parties du guide d'ondes correspondant aux surcouches est obtenue par le fait que chacune desdites surcouches réalisée en un matériau absorbant, a, dans le sens de propagation de la mumière, une longueur L' au moins égale à la longueur pour laquelle l'onde guidée sous la surcouche est substantiellement absorbée, et dans le sens perpendiculaire à la propagation de la lumière une épaisseur W supérieure à la valeur pour laquelle le taux d'absorption se sature.

Comme pour le déphasage de l'art antérieur, on utilise, pour réaliser le déphasage ou l'absorption, les variations d'indice effectif obtenues par addition de surcouches sur une structure de guide d'ondes, mais en choisissant les matériaux en présence, ainsi que leurs différentes dimensions, pour que la propagation ait constamment lieu dans des conditions pour lesquelles les variations d'indice effectif sont saturées en fonction de l'épaisseur et/ou de la longueur de la surcouche déposée.

Conformément à l'invention, tout ceci est obtenu, pour les lentilles de Fresnel à déphasage, selon deux schémas possibles, à savoir:

a) faire en sorte que l'onde guidée soit évanescente dans la surcouche, auquel cas toute épaisseur W supérieure à la profondeur de pénétration de l'onde évanescente dans cette couche produit la même variation d'indice effectif.

Pour cela il convient de choisir l'indice de la surcouche inférieur à l'indice effectif pour les modes propres de la structure initiale.

b) choisir une surcouche absorbante de telle manière que l'onde lumineuse présente dans la surcouche, sous forme évanescente ou homogène, s'atténue sur une distance $W_A$.

Dans ces conditions, toute épaisseur de surcouche $W > W_A$ produit le même effet sur les indices effectifs.

Ce résultat peut être obtenu en utilisant en particulier soit des couches métalliques soit des couches diélectriques très absorbantes (semiconducteur à gap direct par exemple).

Cette solution a cependant l'inconvénient d'atténuer les modes guidés sous la surcouche. Bien que les longueurs L nécessaires pour obtenir un déphasage de $\pi$ soient bien plus faibles que les longueurs L' nécessaires pour

produire une atténuation notable, cet effet peut dans certaines conditions être gênant.

Pour la réalisation selon l'invention de lantilles de Fresnel du type à absorption, on obtient l'absorption pure et simple de la lumière dans toutes les zones de rang pair ou impair en donnant à la longueur de chaque surcouche dans le sens de parcours de la lumière, une longueur L' au moins égale à la longueur pour laquelle l'onde guidée sous la surcouche est entièrement absorbée.

Un avantage important de cette méthode est que si W est en plus choisi tel que W>$W_A$ et L>L', ni l'épaisseur W ni la longueur L ne sont plus des paramètres critiques.

En revanche, l'intensité au foyer est quatre fois plus faible que pour les lentilles à déphasage, puisque l'amplitude y est par principe réduite de moitié.

Les lentilles de Fresnel selon l'invention permettent donc, tout en gardant la précision souhaitée sur la transformation de l'onde plane incidente en une onde réfractée sphérique, de s'affranchir des sujétions de dimensionnement précis des longueurs et épaisseurs des surcouches déposées à la surface du guide d'onde, ce qui facilite beaucoup la fabrication industrielle en série de tels composantes optiques.

Da toute façon, l'invention sera mieux comprise à la lecture qui suit de la description de trois exemples de mise en oeuvre de lentilles de Fresnel intégrées, descriptions qui seront faites en se référant aux figures schématiques 6, 7 et 8, sur lesquelles:

— la figure 6 montre dans le cas d'une lentille à déphasage et à surcouche diélectrique, la variation de l'indice effectif en fonction de l'épaisseur des surcouches,
— la figure 6a montre schématiquement une coupe à travers le guide d'ondes muni de sa surcouche,
— la figure 7 montre dans le cas d'une lentille à déphasage à surcouche absorbante, les variations de l'indice effectif en fonction de l'épaisseur de la surcouche exprimée en Å,
— la figure 7a montre la coupe au travers du guide d'onde correspondant à l'exemple de la figure 7,
— la figure 8 montre pour une lentille du type à absorption, les variations de l'absorption $\alpha$ exprimées en décibels par centimère en fonction de l'épaisseur des surcouches déposées à la surface du guide d'onde,
— la figure 8a montre une coupe en travers du guide d'onde correspondant à la courbe de la figure 8.

Les trois exemples de mise en oeuvre de l'invention qui sont décrits maintenant se référent à une lentille de Fresnel construite à partir d'un guide d'onde de base commun et composé de la façon suivante.

Le substrat est en oxyde de silicium $SiO_2$ obtenu par oxydation thermique de silicium. Il présente un indice de réfraction n=1,458 pour la longueur d'onde $\lambda$=6328 Å.

La couche guidante qui le recouvre est obtenue par un dépôt par réaction chimique en phase vapeur d'oxynitrure de silicium $SiO_xN_y$. Son indice de réfraction n est de 1,60 pour la longueur d'onde $\lambda$ 6328 Å; dans l'exemple choisi son épaisseur W est égale à 0.42 micromètre.

En se référant aux figures 6 et 6a, on va décrire la constitution d'une lentille de Fresnel à déphasage dans laquelle les surcouches sont de nature diélectrique. Les différentes surcouches, déposées à la surface du guide d'one sous forme de plaquettes rectangulaires selon les modalités expliquées en se référant aux figures 3 et 4, sont obtenues par un dépôt de $SiO_2$ sous vide. L'indice de réfraction n de $SiO_2$ constituant la surcouche est égal à 1,458, c'est-à-dire qu'il est inférieur à l'indice n de la couche guidante. La courbe de la figure 6 montre les variations de l'indice effectif du guide d'onde ainsi constitué en fonction de l'épaisseur W exprimée en Å des différentes surcouches diélectriques déposées.

On voit sur la courbe de la figure 6 tracée pour le mode TE que la variation d'indice effectif par rapport à celui du guide initial reste pratiquement constante et égale à $1,4.10^{-2}$ lorsque l'épaisseur W atteint et dépasse 4000 Å. Il est suffisante par conséquent de déposer des sur couches d'épaisseur W supérieure à 4000 Å pour être certain que la variation d'indice effectif par rapport à l'indice du guide d'onde de support est constante et égale $1,4.10^{-2}$. Lorsque cette condition est remplie, on peut calculer facilement la longueur L que doit posséder chaque surcouche dans le sens de propagation de la lumière pour qu'il en résulte un déphasage de l'onde égale à $\pi$. En effet, le déphasage $\Delta\varphi$, la longueur L et la variation $\Delta n$ de l'indice sont liés par la formule:

$$\Delta\phi = \frac{2\pi\Delta nL}{\lambda_o}$$

si $\Delta\phi + \pi$, on trouve

$$L = \frac{\lambda}{2\Delta n}$$

c'est-à-dire dans le cas précis

$$L = \frac{6328.10^{-4}}{2.1,4.10^{-2}} = 23,6 \ \mu m.$$

Dans ces conditions, c'est-à-dire lorsque W est supérieur à 4000 Å, le déphasage introduit est complètement indépendant de l'épaisseur, ce que facilite grandement la fabrication de la lentille.

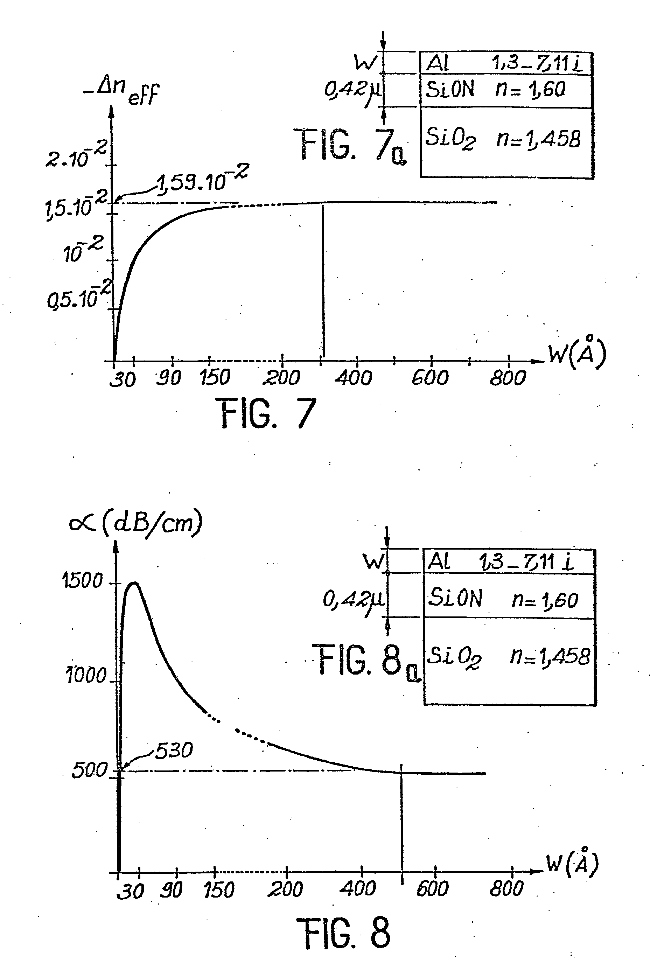

Les figures 7 et 7a sont relatives à une lentille de Fresnel à déphasage constituée à partir du même guide d'onde et par l'adjonction d'une série de surcouches disposées comme dans l'exemple précédent, mais en un matériau absorbant, ici de l'aluminium d'indice complexe 1,3—7,11i.

La figure 7 donne la variation $\Delta n_{eff}$ en fonction de l'épaisseur W des surcouches. $\Delta n_{eff}$ se sature au-dessus de 300 Å d'épaisseur à la valeur $-1,59.10^{-2}$, ce qui correspond à une longueur L pour chaque surcouche de l'ordre de 19,9 $\mu$m pour un déphasage de $\pi$ (avec également

$$\frac{d\varphi}{dW}=0).$$

En effet, la longueur L correspondant à un déphasage de $\pi$ s'écrit dans ce cas

$$L=\frac{6328.10^{-4}}{2.1,59.10^{-2}}=19,9\ \mu m.$$

Il faut noter qu'ici $\Delta n_{eff}$ est négatif du fait de la valeur négative de la partie réelle de la constante diélectrique du métal.

Comme dans l'exemple précédent, le fait de travailler avec des surcouches d'épaisseur supérieure à 300 Å, évite tout problème de stabilité de l'épaisseur des surcouches déposées au cours d'une fabrication industrielle en série.

Les figures 8 et 8a suivantes sont relatives à la fabrication d'une lentille de Fresnel à absorption à l'aide de surcouches conformes au modèle des figures 3 et 4. La structure utilisée pour le guide d'onde initial et les surcouches est la même quant aux matériaux, mais cette fois, l'épaisseur des surcouches d'aluminium est choisie supérieure à 500 Å de façon à travailler avec un taux d'absorption constant et égal comme on le voit sur la figure 8, à 530 db/cm.

Si, dans ces conditions, on souhaite avoir par exemple une diminution de l'intensité d'un facteur 1000, ce qui correspond à une absorption de 30 db, un simple calcul de proportionalité montre que la longueur d'interaction L de chaque surcouche doit être égale à 30/530 cm=565 $\mu$m. On peut donc en toute sécurité, lors d'une fabrication, utiliser des surcouches ayant à la fois une épaisseur supérieure à 500 Å et une longueur supérieure à 565 $\mu$m tout en étant certain d'obtenir toujours une absorption correspondant à une diminution d'intensité dans un rapport d'au moins 1000 entre la lumière incidente et la lumière sortante pour celles des zones de la lentille (d'ordre pair ou d'ordre impair) dont on aura choisi d'absorber le rayonnement lumineux.

On peut noter enfin, pour comparer cet exemple avec l'exemple précédent de la lentille à déphasage possédant des surcouches d'aluminium, que dans ce dernier cas, la longueur d'interaction de 19,9 $\mu$m correspondait à une absorption de lumière de 1 db, pratiquement négligeable par conséquent, et sans commune mesure avec celle que l'on recherche volontairement ici dans le cas d'une lentille à absorption.

On comprendra aisément que la description précédente ne se réfère à des plaquettes 4 présentant une forme rectangulaire (Fig 3) qu'à titre explicatif et qu'on peut adopter d'autres formes. En effet, on sait qu'en optique classique une lentille de Fresnel peut être formée par une suite d'anneaux en forme de portion de ménisques, soit plans-convexes, soit plans-concaves. Le déphasage produit par de telles structures varie alors selon l'épaisseur de matière traversée.

Ces modes de réalisation particuliers peuvent être adoptés également dans l'invention, ce qui revient à remplacer la face arrière des plaquettes rectangulaires 4 de la figure 3, face qui est plane sur cette figure, par une face convexe (figure 3a) ou à remplacer la face avant desdites plaquettes par une face concave (fig. 3b).

La longueur L des plots n'est alors plus constante. Cette longueur L(r) dépend de la distance r à l'axe de la lentille selon les formules suivantes:

a) dans le cas où la variation $\Delta n_{eff}$ d'indice effectif est positive:

$$L(r)=mLo-\frac{Lo}{\lambda o}[\sqrt{r^2+f^2}-f]$$

formule dans laquelle m est un entier représentant le rang de l'anneau considéré. L'entier m est augmenté d'une unité chaque fois que L(r) s'annule, c'est-à-dire chaque fois qu'on passe d'un anneau au suivant. Le rang m est pris égal à 1 pour r=0, ce qui donne au centre une épaisseur L(r)=Lo.

b) dans le cas où $\Delta n_{eff}$ est négative:

$$L(r)=-mLo+\frac{Lo}{\lambda o}[\sqrt{r^2+f^2}-f]$$

avec les mêmes notations, en prenant m=o pour r=o.

Dans les deux cas, l'épaisseur Lo est prise de telle sorte qu'on ait un déphasage de $2\pi$ sur l'axe de la lentille. On a donc:

$$\frac{2\pi}{\lambda}\Delta n_{eff}\ Lo=2\pi.$$

## Revendications

1. Lentille de Fresnel à déphasage, pour optique intégrée, du genre de celles qui comportent, ordonnancées de façon symétrique de part de d'autre de l'axe optique de la lentille, un nombre p de bandes de Fresnel à la surface d'un guide d'ondes propageant une onde selon un mode de propagation déterminé, la bande d'ordre m en partant de l'axe étant de largeur

$$l_m=\sqrt{(m+1)\lambda f}-\sqrt{m\lambda f}$$

et à la distance de l'axe $r_m=\sqrt{m\lambda f}$, formules dans lesquelles f est la distance focale de la lentille, m est une paramètre prenant successivement les différentes valeurs de la suite naturelle des nombres entiers de 1 à p et $\lambda$ la longueur d'onde utilisée, et des surcouches déposées sur les bandes de Fresnel d'ordre m pair (ou impair) en vue d'assurer un déphasage de $\pi$ de la vibration lumineuse dans les parties du guide d'ondes correspondant auxdites surcouches, caractérisée en ce que l'indice réel de réfraction du matériau des surcouches est choisi inférieur à l'indice effectif pour le mode guidé dans le guide d'ondes et en ce que l'épaisseur W des surcouches dans le sens perpendiculaire à la propagation de la lumière est choisie supérieure à la valeur pour laquelle la variation de l'indice effectif de la partie du guide d'ondes sous-jacente se sature, ledit déphasage de $\pi$ de la vibration lumineuse au niveau des surcouches résultant uniquement du choix de la longueur L de chacune desdites surcouches dans le sens de la propagation de la lumière.

2. Lentille de Fresnel du type à déphasage selon la revendication 1, caractérisée en ce que les surcouches sont en matériau diélectrique.

3. Lentille de Fresnel à absorption, pour optique intégrée, du genre de celles qui comportent, ordonnancées de façon symétrique de part et d'autre de l'axe optique de la lentille, un nombre p de bandes de Fresnel à la surface d'un guide d'ondes propageant une onde selon un mode de propagation déterminé, la bande d'ordre m en partant de l'axe étant de largeur

$$l_m=\sqrt{(m+1)\lambda f}-\sqrt{m\lambda f}$$

et à la distance de l'axe $r_m=\sqrt{m\lambda f}$, formules dans lesquelles f est la distance focale de la lentille, m est un paramètre prenant successivement les différentes valeurs de la suite naturelle des nombres entiers de 1 à p et $\lambda$ la longueur d'onde utilisée, et des surcouches déposées sur les bandes de Fresnel d'ordre m pair (ou impair) en vue d'assurer une absorption substantielle de la lumière dans les parties du guide d'ondes correspondant auxdites surcouches, caractérisée en ce que ladite absorption substantielle de la lumière dans les parties du guide d'ondes correspondant aux surcouches est obtenue par le fait que chacune desdites surcouches réalisée en un matériau absorbant, a, dans le sens de propagation de la lumière, une longueur L' au moins égale à la longueur pour laquelle l'onde guidée sous la surcouche est substantiellement absorbée, et, dans le sens perpendiculaire à la propagation de la lumière, une épaisseur W supérieure à la valeur pour laquelle le taux d'absorption se sature.

4. Lentille de Fresnel selon la revendication 2, caractérisée en ce que le guide, d'ondes étant constitué d'un substrat de $SiO_2$ revêtu d'une couche d'oxynitrure de silicium $SiO_xN_y$, les différentes surcouches sont en silice $SiO_2$.

5. Lentille de Fresnel selon la revendication 3, caractérisée en ce que le guide d'ondes étant constitué d'un substrat de $SiO_2$ revêtu d'une couche d'oxynitrure de silicium $SiO_xN_y$, les différentes surcouches sont en aluminium.

## Patentansprüche

1. Fresnel-Linse mit Phasenverschiebung für integrierte Optik, von der Art, beider auf beiden Seiten der optischen Achse der Linse in symmetrischer Weise eine Anzahl p von Fresnel-Streifen auf der Oberfläche eines Wellenleiters angeordnet ist, der eine Welle mit einer bestimmten Schwingungsart ausbreitet, wobei ausgehend von der Achse der Streifen von der Ordnung m die Breite

$$l_m=\sqrt{(m+1)\lambda f}-\sqrt{m\lambda f}$$

aufweist und der Abstand von der Achse $r_m=\sqrt{m\lambda f}$ ist, wobei in den Formeln f die Brennweite der Linse, m ein Parameter, der aufeinanderfolgend die verschiedenen Werte der Reihe der natürlichen, ganzen Zahlen von 1 bis p annimmt und $\lambda$ die verwendete Wellenlänge bedeuten, und Schichtauflagen auf den Fresnel-Streifen der geraden (oder ungeraden) Ordnung m aufgebracht sind, um eine Phasenverschiebung der Lichtschwingung von $\pi$ in den Teilen des Wellenleiters sicherzustellen, die den Schichtauflagen entsprechen, dadurch gekennzeichnet, daß der reelle Brechungsindex des Materials der Schichtauflagen kleiner als der effektive Brechungsindex für die geleitete Art in dem Wellenleiter ist und daß die Dicke W der Schichtauflagen in der zur Ausbreitung des Lichtes senkrechten Richtung größer als der Wert gewählt ist, bei dem die Änderung des effektiven Brechungsindex des darunterliegenden Teils des Wellenleiters eine Sättigung erfährt, wobei die Phasenverschiebung der Lichtschwingungen um $\pi$ bei den Schichtauflagen einzig aufgrund der Wahl der Länge L jeder dieser Schichtauflagen in Richtung der Lichtfortpflanzung erfolgt.

2. Fresnel-Linse von der Art mit Phasenverschiebung nach Anspruch 1, dadurch gekennzeichnet, daß die Schichtauflagen aus dielektrischem Material sind.

3. Fresnel-Linse mit Absorption für integrierte Optik, von der Art, bei der auf beiden Seiten der optischen Achse der Linse in symmetrischer Weise eine Anzahl p von Fresnel-Streifen auf der Oberfläche eines Wellenleiters angeordnet ist, der eine Welle mit einer bestimmten Schwingungsart ausbreitet, wobei ausgehend von der Achse der Streifen von der Ordnung m die Breite

$$l_m=\sqrt{(m+1)\lambda f}-\sqrt{m\lambda f}$$

aufweist und der Abstand von der Achse $r_m=\sqrt{m\lambda f}$ ist, wobei in den Formeln f die Brennweist der Linse, m ein Parameter, der aufeinanderfolgend die verschiedenen Werte der Reihe der natürlichen, ganzen Zahlen von 1 bis p annimmt und $\lambda$ die verwendete Wellenlänge bedeuten, und Schichtauflagen auf den Fresnel-Streifen der geraden (oder ungeraden) Ordnung m aufgebracht sind, um eine wesentliche Absorption des Lichtes in den Teilen des Wellenleiters sicherzustellen, die den Schichtauflagen entsprechen, dadurch gekennzeichnet, daß der reelle Brechungsindex des Materials der Schichtauflagen kleiner als der effektive Brechungsindex für die geleitete Art in dem Wellenleiter ist und daß die Dicke W der Schichtauflagen in der zur Ausbreitung des Lichtes senkrechten Richtung größer als der Wert gewählt ist, bei dem die Änderung des effektiven Brechungsindex des darunterliegenden Teils des Wellenleiters eine Sättigung erfährt, wobei die Phasenverschiebung der Lichtschwingungen um $\pi$ bei den Schichtauflagen einzig aufgrund der Wahl der Länge L jeder dieser Schichtauflagen in Richtung der Lichtfortpflanzung erfolgt.

4. Fresnel-Linse nach Anspruch 2, dadurch gekennzeichnet, daß der Wellenleiter aus einem Substrat aus $SiO_2$ besteht, das mit einer Schicht aus Siliciumoxinitrid $SiO_xN_y$ bedeckt ist, und daß die verschiedenen Schichtauflagen aus Siliciumoxid $SiO_2$ sind.

5. Fresnel-Linse nach Anspruch 3, dadurch gekennzeichnet, daß der Wellenleiter aus einem Substrat aus $SiO_2$ besteht, das mit einer Schicht aus Siliciumoxinitrid $SiO_xN_y$ bedeckt ist, und daß die verschiedenen Schichtauflagen aus Aluminium sind.

## Claims

1. A Fresnel lens of the phase-shift type, for integrated optics, and comprising, symmetrically distributed on either side of the optical axis of the lens, a number p of Fresnel bands on the surface of a waveguide propagating a wave in a predetermined propagation mode, the $m^{th}$ band from the axis having the width

$$l_m=\sqrt{(m+1)\lambda f}-\sqrt{m\lambda f}$$

and a distance from the axis

$$r_m=\sqrt{m\lambda f}$$

in which formulae, f is the focal length of the lens, m is a parameter having successively the different values of the natural sequence of whole numbers from l to p, and $\lambda$ is the wavelength employed, and overlayers on those Fresnel bands for which m has an even value (or add value) whereby to provide a phase shift of $\pi$ for the light vibrations in those parts of the waveguide corresponding to the said overlayers, characterized in that the actual refractive index of the material of the overlayers is less than the effective refractive index for the mode guided in the waveguide, and in that the thickness W of the overlayers in the direction perpendicular to the direction of propagation of the light is greater than the value for which the effective refractive index of the underlying part of the waveguide attains its constant maximum value, said phase-shift of $\pi$ for the light vibrations under the overlayers resulting from appropriate selection of the precise length L of each of said overlayers in the direction of propagation of the light.

2. A Fresnel lens of the phase-shift type according to Claim 1, characterized in that the overlayers comprise a dielectric material.

3. A Fresnel lens of the absorption type, for integrated optics, and comprising, symmetrically distributed on either side of the optical axis of the lens, a number p of Fresnel bands on the surface of a waveguide propagating a wave in a predetermined propagation mode, the $m^{th}$ band from the axis having the width

$$l_m=\sqrt{(m+1)\lambda f}-\sqrt{m\lambda f}$$

and a distance from the axis

$$r_m=\sqrt{m\lambda f}$$

in which formulae f is the focal length of the lens, m is a parameter having successively the different values of the natural sequence of whole numbers from l to p, and $\lambda$ is the wavelength employed, and overlayers on those Fresnel bands for which m has an even value (or add value) whereby to provide substantially complete absorption of the light in those parts of the waveguide corresponding to the said overlayers, characterized in that said substantially complete absorption of light in those parts of the waveguide corresponding to the overlayers results from the fact that each of said overlayers is formed from an absorbent material having a length L', in the direction of propagation of the light, which is at least equal to the length within which the wave guided under the overlayer is substantially completely absorbed, and a thickness W, in the direction perpendicular to the direction of propagation of the light, greater than the thickness at which the rate of absorption reaches its constant maximum value.

4. A Fresnel lens according to Claim 2 characterized in that the waveguide comprises a substrate of $SiO_2$, on which is a layer of silicon oxynitride $SiO_xN_y$, and the various overlayers comprise silica $SiO_2$.

5. A Fresnel lens according to Claim 3 characterized in that the waveguide comprises a substrate of silica on which is a layer of silicon oxynitride $SiO_xN_y$, and the various overlayers comprise aluminium.

air  $n=1$

$n_g$

$n_s$

2

1

$x$

$z$ $0$ $y$

## FIG. 1

I

II

$(\Sigma)$

$P'$

$P$

$(\Sigma')$

$dr$

$n$

$x$

$0$

$f$ $F$

$3$

$E$

## FIG. 2

1

FIG.3

FIG.3a

FIG.3b

FIG. 4

**FIG. 5a**

| $CeO$ | $n = 2$ |
|---|---|
| $BaO$ | $n = 1,55$ |
| $Verre$ | $n = 1,51$ |

**FIG. 5**

**FIG. 6a**

| $SiO_2$ | $n = 1,458$ |
|---|---|
| $SiON$ | $n = 1,60$ |
| $SiO_2$ | $n = 1,458$ |

**FIG. 6**

**FIG. 7a**

| Al | 1,3 – 7,11 i |
|---|---|
| SiON | n = 1,60 |
| SiO₂ | n = 1,458 |

**FIG. 7**

**FIG. 8a**

| Al | 1,3 – 7,11 i |
|---|---|
| SiON | n = 1,60 |
| SiO₂ | n = 1,458 |

**FIG. 8**